# EUROPEAN PATENT APPLICATION

(11) **EP 2 256 732 A1**
(43) Date of publication of application: **01.12.2010**
(21) Application number: 10163526.6
(22) Date of filing: 21.05.2010
(51) Int. Cl.: G11B 19/02, G11B 20/10, G11B 27/10

(54) **Information reproducing apparatus**

(30) Priority: 25.05.2009 JP 2009125257
(71) Applicant: Funai Electric Co., Ltd., Daito-shi, Osaka 574-0013 (JP)
(72) Inventor: Imoto, Yoshinobu, Daito-shi Osaka 574-0013 (JP)
(74) Representative: Grünecker, Kinkeldey, Stockmair & Schwanhäusser Anwaltssozietät

(57) **Abstract**

In a case where free space of a local storage (15) becomes smaller than a predetermined threshold while additional contents are downloaded by executing a "BD-Live" function, a screen (30) for deleting old contents is displayed on a display (D). When a user deletes the old contents and the free space of the local storage (15) becomes equal to or larger than the threshold, the screen (30) displayed on a display (D) is automatically erased. By repeating the deletion of old contents until download of the additional contents is completed, the entire additional contents are completely acquired.

## Description

### Technical Field

The present invention relates to an information reproducing apparatus for acquiring contents not recorded on a recording medium through a network.

### Background Art

Recently, in an information reproducing apparatus for reproducing information recorded on a recording medium such as an optical disc, it is becoming a popular function to acquire contents not recorded on the recording medium through a network and subsequently reproduce the acquired contents.

"BD-Live" is one example of such function. "BD-Live" is a function for downloading contents not recorded on a BD (Blu-ray (registered trademark) Disc) medium from a particular server through a network such as Internet by using an information apparatus connected to the network and reproducing the contents. Hereinafter, contents to be newly acquired by executing the "BD-Live" function are referred to as "additional contents".

Additional contents include, for example, the latest advertisement picture and privilege picture relating to information recorded on the BD medium. The "BD-Live" function may be used in other applications: distribution of interactive contents such as match type game and chat, questionnaire survey, viewing log analysis, and the like.

Therefore, application software called "BD-J (Blu-ray Disc Java)" based on Java (registered trademark) program is installed in an information reproducing apparatus supporting the "BD-Live" function. And a Java content started up by the BD-J is recorded on a BD medium supporting the "BD-Live" function, together with contents such as video and audio.

When the "BD-Live" function is executed, acquired additional contents are stored in a local storage of the information reproducing apparatus. If the information reproducing apparatus is a BD player, the above-mentioned local storage is, for example, an SD (Secure Digital) card connected to the BD player. If the information reproducing apparatus is a BD recorder, the above-mentioned local storage is, for example, an HDD (Hard Disc Drive) equipped in the BD recorder.

During execution of the "BD-Live" function, when free space of the local storage is smaller than an amount of data of additional contents to be acquired, it is impossible to download the entire additional contents. That is, even if the "BD-Live" function is executed, the additional contents cannot be normally reproduced.

The below-mentioned Patent Literatures 1 to 5 refer to programs, recording apparatuses, and the like, which can record data even if free space of a recording medium is insufficient when data is recorded on the recording medium.

Specifically, Patent Literature 1 discloses a storage device management program. The program determines whether a portable storage device has free space necessary for writing of data. If the portable storage device does not have necessary free space, an actual data recorded in the portable storage device is stored in a storage device controlled by a remote computer connected to the portable storage device through a network, and the necessary free space is created by replacing the actual data with metadata produced by downsizing the actual data.

Patent Literature 2 discloses a recording device and program for the same. When free space of a memory card becomes smaller than a predetermined threshold, free space of a flash memory is checked. If the flash memory has any free space, it is further checked whether the free space is smaller than an amount of data recorded in the memory card. If the amount of data recorded in the memory card is smaller than the free space in the flash memory, all of the data are moved to the flash memory. If the amount of data recorded in the memory card is larger than the free space in the flash memory, an equivalent amount of data to the free space of the flash memory, which is a part of the data recorded in the memory card, is moved to the flash memory.

Patent Literature 3 discloses a system for adding application to an IC card. In a case where new application is added to an existing IC card, when free space in a memory of the IC card is smaller than an amount of application data to be added, existing application stored in the IC card is loaded into an IC card reader/writer for writing data to the IC card, and then the application is deleted to enlarge free space in the memory of the IC card.

Patent Literature 4 discloses a system for distributing contents in which when a size of contents to be written to contents area of a memory exceeds a remaining amount of the contents area, existing contents recorded in a memory card is deleted before distribution of contents.

Patent Literature 5 discloses a download system for an Internet terminal and a digital broadcast receiver which receive download contents. In this system, information on the remaining number of contents downloadable into a memory card connected to the terminal or receiver and information on the remaining space of the memory card is compared with information of received contents, and it is determined, according to the result of comparison, whether download of contents is possible or not.

### Citation List

### Patent Literature

Patent Literature 1: Japanese Laid-Open Patent Publication No. 2007-249414
Patent Literature 2: Japanese Laid-Open Patent Publication No. 2007-048173
Patent Literature 3: Japanese Laid-Open Patent Publication No. 2003-308498
Patent Literature 4: Japanese Laid-Open Patent Publication No. 2002-041819
Patent Literature 5: Japanese Laid-Open Patent Publication No. 2001-344216

### Summary of Invention

### Technical Problems

However, according to the technique disclosed in Patent Literatures 1 to 3, contents recorded in the storage device need to be moved to another storage device. According to the technique disclosed in Patent Literature 4, it is impossible to select contents to be deleted. According to the technique disclosed in Patent Literature 5, only contents having capacity not larger than free space in a local storage can be downloaded.

In view of the problems described above, it is an object of the present invention to provide an information reproducing apparatus capable of acquiring entire contents not recorded on a recording medium when downloading them through a network.

### Solution to Problems

The information reproducing apparatus according to the present invention, in which contents not recorded on a recording medium are acquired through a network and stored in a storage device, displays a screen for prompting a user to delete existing contents on a display when free space of the storage device becomes smaller than a predetermined threshold during acquisition of the contents. The apparatus automatically erases the screen only when the free space of the storage device becomes equal to or larger than the threshold by deleting the existing contents after displaying the screen, and acquires entire contents completely by deleting the existing contents.

With this configuration, during acquisition of the contents not recorded on the recording medium through the network, even if the free space of the storage device for storing the contents reduces, the entire contents can be acquired.

In the information reproducing apparatus according to the present invention, acquisition of the contents may be continued while the screen for prompting a user to delete existing contents.

According to this, it is possible to reduce a time required to acquire the entire contents.

In the information reproducing apparatus according to the present invention, acquisition of the contents may be interrupted while the screen for prompting a user to delete existing contents.

According to this, it is possible to reduce a load on the information reproducing apparatus.

### Advantageous Effects of Invention

According to the present invention, during acquisition of the contents not recorded on the recording medium through the network, even if the free space of the storage device for storing the contents reduces, the entire contents can be acquired.
Other objects, features and advantages of the invention will become apparent from the following description of the embodiment of the invention taken in conjunction with the accompanying drawings.

### Brief Description of Drawings

Fig. 1 is a block diagram showing a BD player;
Fig. 2 is a flow chart showing an operation of acquiring contents not recorded on a BD medium through a network;
Fig. 3 is a view showing an example of a screen displayed with reproduction of the BD medium; and
Fig. 4 is a view showing an example of a screen displayed for enlarging free space in a local storage.

### Description of Embodiments

Hereinafter, an embodiment of the present invention will be described with reference to the drawings. In the following drawings, the same reference signs are applied to the identical or corresponding part.

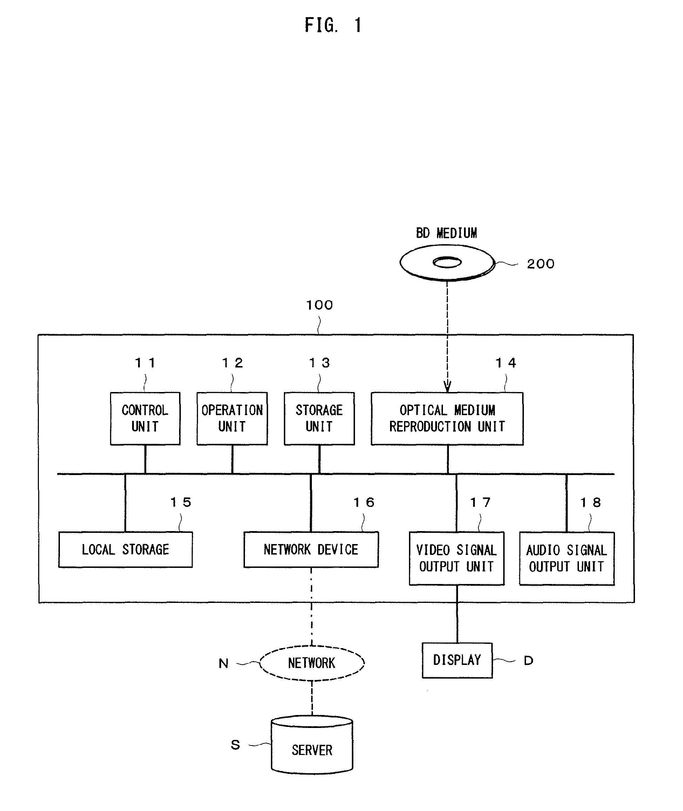

Fig. 1 is a block diagram showing the configuration of a BD (Blu-ray (registered trademark) Disc) player 100, according to an embodiment of the present invention.

In the BD player 100 shown in Fig. 1, a control unit 11 is made up of, for example, a CPU (Central Processing Unit) and controls each part of the BD player 100.

An operation unit 12 comprises, for example, a button area (not illustrated), a remote controller (not illustrated) for remote-controlling the BD player 100, and light receiving area (not illustrated) provided on a front panel of the BD player 100 for receiving an infrared signal transmitted from the remote controller.

A storage unit 13 is made up of, for example, a ROM (Read Only Memory), and a control program to be executed by the control unit 11 is stored therein. In the embodiment, since the BD player 100 supports the "BD-Live" function, the above-mentioned Java program "BD-J" is stored in the storage unit 13.

An optical medium reproduction unit 14 is made up of, for example, an optical drive capable of reproducing optical media such as BD, DVD (Digital Versatile Disc) and CD (Compact Disc). A BD medium 200 supports the "BD-Live" function. Accordingly, the Java content started up by the BD-J is recorded on the BD medium 200 together with other contents (video and audio). The BD medium 200 is an example of the recording medium in the present invention.

A local storage 15 is made up of, for example, an SD (Secure Digital) card and a card interface to which the SD card is connected. The local storage 15 is an example of the storage device in the present invention.

A network device 16 comprises, for example, a LAN (Local Area Network) port. A LAN cable indicated by a chain line shown in Fig. 1 is connected to the network device 16.

A server S provides various contents to the BD player 100 through a network N. The network N is commonly the Internet.

A video signal output unit 17 outputs a video signal reproduced by the optical medium reproduction unit 14 to a display D. The display D is, for example, a monitor equipped with an LCD (Liquid Crystal Display) connected to the BD player 100.

An audio signal output unit 18 outputs an audio signal reproduced by the optical medium reproduction unit 14 to a speaker (not illustrated).

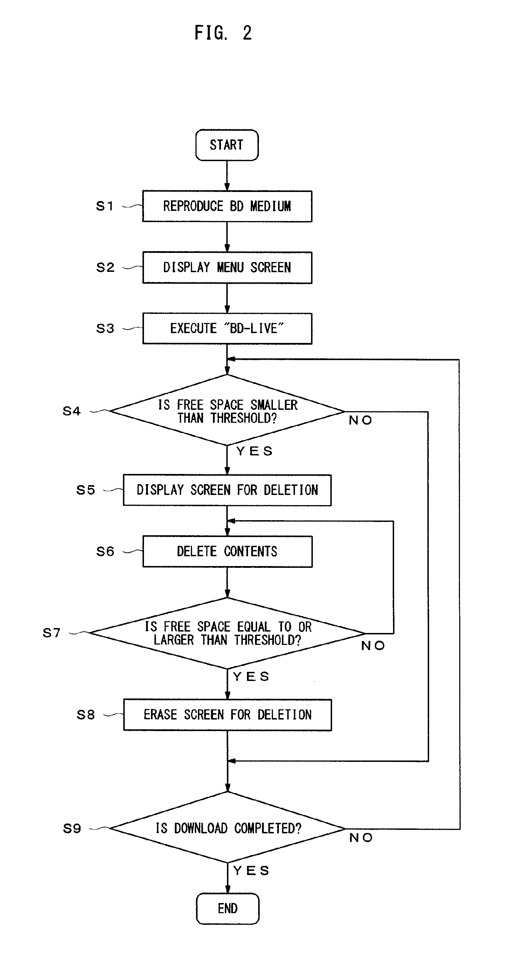

In the BD player 100 with the above configuration, when the "BD-Live" function is executed, a predetermined operation indicated in the flow chart of Fig. 2 is performed.

Specifically, at step S1 in Fig. 2, the operation unit 12 (Fig. 1) is operated by a user and reproduction of the BD medium 200 (Fig. 1) is started in the optical medium reproduction unit 14 (Fig. 1).

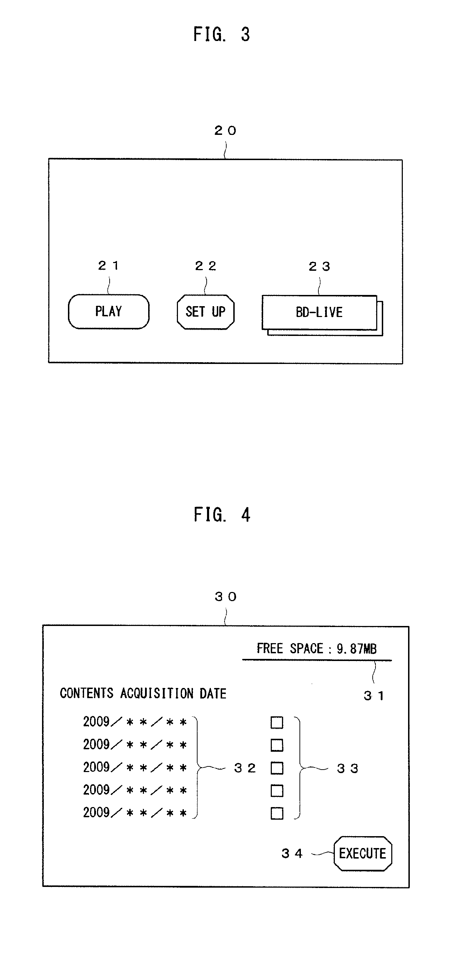

At step S2, with reproduction of the BD medium 200 at step S1, a menu screen, for example, indicated by a reference numeral 20 in Fig. 3 is displayed on the display D. In the menu screen 20 in Fig. 3, "PLAY" indicated by a reference numeral 21 is an item for reproducing a video (e.g. a movie) recorded on the BD medium 200. "SET UP" indicated by a reference numeral 22 is an item for various settings on viewing (e.g. language and subtitles). "BD-LIVE" indicated by a reference numeral 23 is an item for executing the aforementioned "BD-Live" function, i.e., for downloading the contents not recorded on the BD medium 200. Hereinafter, contents to be newly acquired by executing the "BD-Live" function is referred to as "additional contents".

At step S3 in Fig. 2, the operation unit 12 is operated by the user to select the item 23 on the menu screen 20 (Fig. 3), and the "BD-Live" function is executed. In response to this, download of the additional contents is started. The downloaded additional contents are stored in the local storage 15 (Fig. 1).

At step S4, the control unit 11 (Fig. 1) checks whether free space of the local storage 15 is smaller than a predetermined threshold (e.g. 10MB) or not. As a result of the check, if the free space of the local storage 15 is smaller than the predetermined threshold (YES at step S4), the flow advances to step S5. If the free space of the local storage 15 is not smaller than the predetermined threshold (No at step S4), the flow advances to step S9. From step S4 to step S8, download of the additional contents started at step S3 is being continued.

At step S5, based on the result of the check at step S4, a screen for deleting old contents, for example, indicated by a reference numeral 30 in Fig. 4 is displayed on the display D. In the screen 30 in Fig. 4, an item 31 indicates a number of bytes of free space in the local storage 15 (Fig. 1). A reference numeral 32 indicates acquisition date when old contents recorded in the local storage 15 were acquired. The term "old contents" is synonymous with the term "existing contents" in the present invention. A plurality of boxes 33 are used when the user selects any old content to be deleted from the local storage 15. A button 34 is used when the user deletes the old contents. Thus, the screen 30 for deleting old contents is a screen displayed for prompting the user to delete the existing contents to enlarge the free space in the local storage 15.

At step 6, the operation unit 12 is operated by the user and the old contents are deleted. In this process, the user operates the operation unit 12 and selects any box 33 corresponding to the old content to be deleted on the screen 30 in Fig. 4. Then, the user pushes the button 34 by operating the operation unit 12 to delete the old contents whose acquisition date 32 is corresponding to the selected box 33. This leads to enlargement of the free space in the local storage 15.

At step S7, the control unit 11 again checks whether free space of the local storage 15 is equal to or larger than a predetermined threshold (e.g. 10MB) or not. As a result of the check, if the free space of the local storage 15 is equal to or larger than the predetermined threshold (YES at step S7), the flow advances to step S8. If the free space of the local storage 15 is not equal to or larger than the predetermined threshold (No at step S7), the flow returns to step S6.

At step S8, the screen 30 displayed on the display D at step S5 is automatically erased based on the check result at step S7. After the screen 30 is deleted, the flow advances to step S9.

At step S9, the control unit 11 checks whether download of the additional contents is completed or not. As a result of the check, if download is completed (YES at step 9), this flow chart is terminated. If download is not completed (NO at step S9), the flow returns to step S4. In step S9, even if download of the additional contents is not completed, i.e., when step 9 is "NO", download of the additional contents started at step S3 is continued.

Thus, in the embodiment described above, when free space of the local storage 15 becomes smaller than a predetermined threshold while downloading the additional contents by executing the "BD-Live" function, the screen 30 for deleting old contents is displayed on the display D. In this state, the user operates the operation unit 12 and selects any box 33 corresponding to the old content to be deleted on the screen 30. Then, the user pushes the button 34 to delete the old contents whose acquisition date 32 is corresponding to the selected box 33. If the free space of the local storage 15 is still smaller than the threshold after deleting the old contents, further deletion of the old contents is performed. And when the free space of the local storage 15 becomes equal to or larger than the threshold, the screen 30 displayed on the display D is automatically erased. By repeating above-described deletion of the old contents until download of the additional contents is completed, the entire additional contents are completely acquired. Therefore, the additional contents can be normally reproduced.

The present invention can employ various embodiments other than the embodiment described above. In the above embodiment, Java program "BD-J" for executing the "BD-Live" function is stored in the storage unit 13 and the Java content started up by the BD-J is recorded on the BD medium 200, where the "BD-Live" function is executed to download the additional contents not recorded on the BD medium 200 from the server S. However, the present invention is not limited thereto. Any type of recording medium, information reproducing apparatus and program can be used for the technique of acquiring contents not recorded on the recording medium through a network such as "BD-Live" function.

In the above embodiment, although the information reproducing apparatus is the BD player 100, the present invention is applicable to other information reproducing apparatus such as a BD recorder.

In the above embodiment, the local storage 15 is made up of an SD (Secure Digital) card and a card interface to which the SD card is connected. Alternatively, other storage devices such as an HDD (Hard Disc Drive) may be provided to store the additional contents.

In the above embodiment, the threshold of the free space of the local storage 15 checked at step S4 in Fig. 2 is set to 10MB. However, any threshold, not limited to 10MB, may be set.

In the above embodiment, the acquisition date of the old contents (date 32) is indicated in the screen 30 displayed at step S5 in Fig. 2. Alternatively, a title of the BD medium 200 reproduced when the old contents were acquired may be indicated.

In the above embodiment, download of the additional contents is continued even while the screen 30 for deleting old contents is displayed. Alternatively, download may be interrupted while the screen 30 is displayed and may be started again when the screen 30 is automatically erased. In this case, step of "interrupt download" is added between step S4 and step S5, and step of "resume download" is added between step S8 and step S9.

In the above embodiment, the display D is the monitor equipped with LCD (Liquid Crystal Display) connected to the BD player 100. Alternatively, a display employing, for example, organic EL (Electroluminescence) element may be provided in the BD player 100 itself.

It should be understood that although the foregoing description has been made on preferred embodiments, the invention is not limited thereto and various changes and modifications may be made without departing from the spirit of the invention and the scope of the appended claims.

### Reference Signs List

- 11: control unit
- 12: operation unit
- 13: storage unit
- 14: optical medium reproduction unit
- 15: local storage
- 16: network device
- 17: video signal output unit
- 30: screen for deleting old contents
- 100: BD player
- 200: BD medium
- N: network
- S: server
- D: display

## Claims

1. An information reproducing apparatus for acquiring contents not recorded on a recording medium through a network (N) and storing the acquired contents in a storage device (15),
**characterized in that** a screen (30) for prompting a user to delete existing contents is displayed on a display (D) when free space of the storage device (15) becomes smaller than a predetermined threshold during acquisition of the contents,
the screen (30) is automatically erased only when the free space of the storage device (15) becomes equal to or larger than the threshold by deleting the existing contents after the screen (30) is displayed, and
entire contents are completely acquired by deleting the existing contents.

2. The information reproducing apparatus according to claim 1,
wherein acquisition of the contents is continued while the screen (30) is being displayed.

3. The information reproducing apparatus according to claim 1,
wherein acquisition of the contents is interrupted while the screen (30) is being displayed.

4. The information reproducing apparatus according to claim 3,
wherein acquisition of the contents is started again when the screen (30) is automatically erased.

5. The information reproducing apparatus according to claim 1,
wherein the recording medium is a BD medium (200) supporting BD-Live function for downloading contents not recorded on the BD medium (200), and
Java program BD-J for executing the BD-Live function is stored in the information reproducing apparatus.

6. The information reproducing apparatus according to claim 1,
wherein a number of bytes of free space is indicated in the screen.

7. The information reproducing apparatus according to claim 6,
wherein acquisition date of old contents recorded in the storage device (15) is further indicated in the screen (30).
